# EUROPÄISCHE PATENTSCHRIFT

(11) **EP 1 469 588 B1**
(45) Veröffentlichungstag und Bekanntmachung des Hinweises auf die Patenterteilung: **28.12.2005**
(21) Anmeldenummer: 04002285.7
(22) Anmeldetag: 03.02.2004
(51) Int. Cl.: H02P 6/20, H02P 6/16, H02P 6/24, F02N 11/08, H02P 6/18

(54) **Vorrichtung zur Verbesserung des Start-Stopp-Betriebes eines Fahrzeugs**
Apparatus for improving a vehicle start-stop operation
Appareil pour améliorer le fonctionnement d'arrêt et de redémarrage d' un véhicule

(30) Priorität: 14.04.2003 DE 10317092
(43) Veröffentlichungstag der Anmeldung: 20.10.2004
(73) Patentinhaber: ROBERT BOSCH GMBH, 70442 Stuttgart (DE)
(72) Erfinder: Ackermann, Manfred, 71570 Oppenweiler (DE); Rechberger, Klaus, 71638 Ludwigsburg (DE)

(56) Entgegenhaltungen:
- FR-A- 2 729 435
- US-A- 4 630 577
- US-B1- 6 313 601

## Beschreibung

Die Erfindung betrifft eine Vorrichtung zur Verbesserung des Start-Stopp-Betriebes eines Fahrzeugs.

### Stand der Technik

Zum Zwecke einer Verringerung des Kraftstoffverbrauchs, einer Verbesserung der elektrischen Bordnetzleistung und einer Verbesserung des Start-Stopp-Betriebes eines Fahrzeugs wurden in den letzten Jahren Systeme entwickelt, die einen integrierten Startergenerator auf der Kurbelwelle aufweisen, sowie Systeme, die anstelle eines üblichen Startergenerators einen riemenbetriebenen Startergenerator aufweisen. Bei diesen bekannten Systemen liegt beim Startbetrieb im Start-Stopp-Betriebsfall insbesondere dann, wenn die vorhandene Bordnetzspannung 12 V beträgt, im Vergleich zu einem konventionellen Startsystem ein verhältnismäßig kleines Trägheitsmoment an der Kurbelwelle vor. Ferner ergibt sich bei einer stromminimierten Auslegung des riemenbetriebenen Startergenerators oder des integrierten Startergenerators im Vergleich zu einem konventionellen Startsystem ausgehend von der Drehzahl Null ein vergleichsweise kleines maximales Startmoment.

Diese Effekte führen zu einer starken Abhängigkeit der Starteigenschaften von der Auspendelposition des Verbrennungsmotors. Am Anfang einer Startphase ist für einen ersten Zeit- und Drehwinkelbereich der Startmomentbedarf deutlich höher als in der anschließenden Durchdrehphase. Bei Verwendung einer Klauenpolmaschine als Generator wird die elektrische Erregung über Schleifringe zugeführt. Bei üblicher Dimensionierung der Erregerwicklung ergibt sich eine vergleichsweise große elektrische Zeitkonstante, die im Bereich von 100 ms liegt. Bei Vorliegen einer heißen Erregerwicklung, beispielsweise bei Temperaturen im Bereich von 180°C, ist sowohl die Zeitkonstante als auch der deutlich verringerte stationäre Wert des Erregerstroms ein Problem für die Startdynamik in einem Start-Stopp-Betrieb des jeweiligen Fahrzeugs.

Bezüglich dieses Start-Stopp-Betriebes gibt es Forderungen der Fahrzeughersteller, gemäß welcher bei einem sogenannten Ampelstart die Zeit, bis das Fahrzeug in Vortrieb geht, im Bereich von 300 bis 500 ms liegen soll. Ein Erfüllen dieser Forderungen mit den bekannten Systemen ist insbesondere bei einer knappen Momentenauslegung wegen des langsamen Momentenaufbaus mittels des Erregerstromes, insbesondere bei hoher Generatortemperatur, problematisch.

Aus der EP 0 825 700 A1 ist ein Spannungsversorgungssystem mit erhöhter Ausgangsleistung bekannt. Bei diesem bekannten System wird bei einer Zuschaltung eines starken Verbrauchers die an der Erregerwicklung liegende Spannung kurzzeitig gegenüber der Bordnetzspannung erhöht. Diese Spannungserhöhung wird entweder mittels zusätzlicher Wicklungen und Hilfsdioden im Generator oder mit Hilfe eines Spannungswandlers erhalten.

Aus der DE 197 21 386 A1 ist eine Startvorrichtung zum Starten einer Brennkraftmaschine bekannt. Diese bekannte Startvorrichtung weist einen Startermotor auf, der über ein Starterrelais mit einer Spannungsquelle verbindbar und mit der Brennkraftmaschine zum Andrehen in Eingriff bringbar ist. Die Ansteuerung des Starterrelais und/oder des Startermotors erfolgt über ein elektronisches Steuergerät. Dieses steuert dem Starterrelais und/oder dem Startermotor zugeordnete Halbleiter-Leistungsendstufen derart an, dass zumindest in einem Start-Stopp-Betrieb das Starterrelais im Stopp-Zustand der Brennkraftmaschine seine Einspurstellung aufweist, d. h. den Ritzel des Startermotors in den Zahnkranz der Brennkraftmaschine einspurt. Dadurch wird neben einer Zeiteinsparung beim Starten in der Start-Stopp-Betriebsart ein sauberes, verschleißfreies Einspuren erreicht.

### Vorteile der Erfindung

Eine Vorrichtung mit den Merkmalen des Anspruchs 1 weist gegenüber dem Stand der Technik den Vorteil auf, dass die zum Aufbau des Erregerfeldes notwendige Zeit erheblich reduziert ist. Dies ermöglicht es, das in der Startphase notwendige Motordrehmoment schnell zur Verfügung zu stellen, so dass die bei Start-Stopp-Systemen auftretende Startzeit im Vergleich zu bekannten Systemen verkürzt ist. Dies wird dadurch ermöglicht, dass mittels einer Sensoreinheit in der Stoppphase des Start-Stopp-Betriebes, also bei einem Stillstand des Rotors, die Lage der Wicklungsachse der Erregerwicklung detektiert wird und die gewonnene Information am Anfang des darauffolgenden Startvorganges dazu verwendet wird, mittels des ohnehin vorhandenen statorseitigen Umrichters und der Statorwicklungen schnell bzw. mit einer kleinen elektrischen Zeitkonstante die magnetische Energie für das Erregerfeld in der Maschine aufzubauen.

Ist dies geschehen, dann wird der über den Umrichter bewirkte Stromfluss durch die Statorwicklungen beendet und ein Stromfluss durch die Erregerwicklung freigegeben, wodurch ein weiterer Aufbau des Erregerfeldes erfolgt.

Da die im Stator wirksame Zeitkonstante im Bereich von nur 2 - 5ms liegt, erfolgt der Feldaufbau in der Maschine über die Statorwicklungen innerhalb von etwa 10ms. In diesem kurzen Zeitabschnitt wird in der Erregerwicklung eine positive Spannung in der Größenordnung von 100V induziert. Damit diese hohe Spannung keine unerwünschten Auswirkungen auf das Bordnetz hat, ist in vorteilhafter Weise zwischen der Erregerwicklung und dem Bordnetz eine Entkopplungsdiode vorgesehen, wie sie im Anspruch 5 angegeben ist.

Weitere vorteilhafte Eigenschaften der Erfindung ergeben sich aus deren beispielhafter Erläuterung anhand der Zeichnung.

### Zeichnung

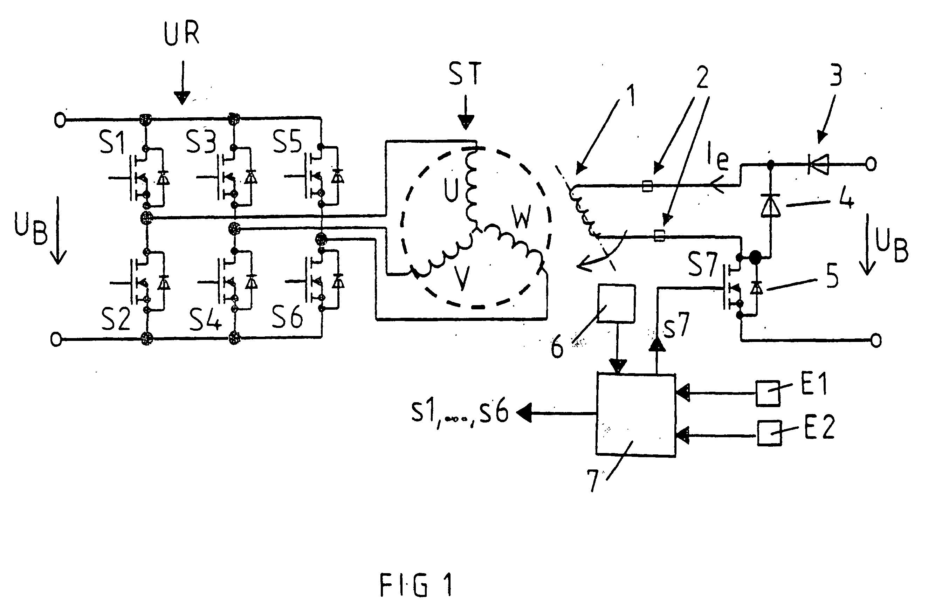

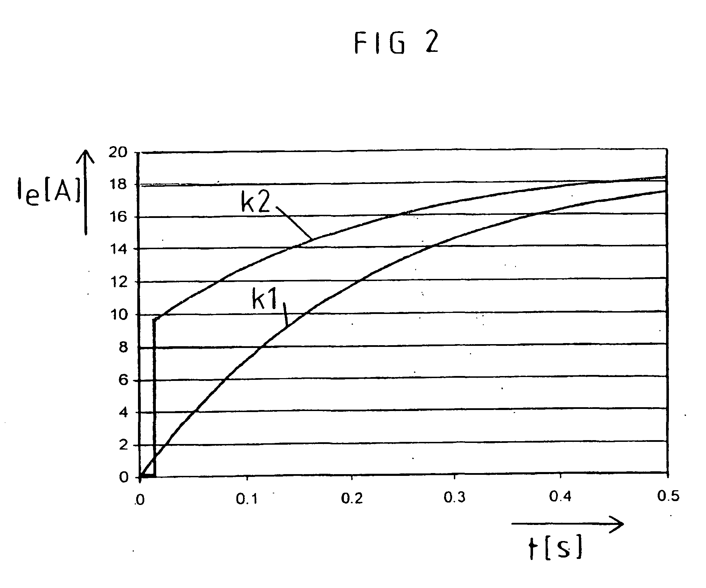

Die Figur 1 zeigt ein Schaltbild eines Ausführungsbeispiels für eine Vorrichtung gemäß der Erfindung. Die Figur 2 zeigt ein Diagramm zur Erläuterung der Funktionsweise der Erfindung.

### Beschreibung

Die Figur 1 zeigt ein Schaltbild eines Ausführungsbeispiels für eine Vorrichtung gemäß der Erfindung. Mittels der gezeigten Vorrichtung wird erreicht, dass in einem Start-Stopp-Betrieb des Fahrzeugs die Startphase im Vergleich zu bekannten Start-Stopp-Systemen verkürzt ist, da das in der Startphase erforderliche hohe Drehmoment bereits nach vergleichsweise kurzer Zeit bereitgestellt wird.

Die in der Figur 1 dargestellte Vorrichtung weist eine Erregerwicklung 1 auf, die dem Startergenerator des Fahrzeugs zugeordnet ist. Der durch die Erregerwicklung 1 fließende Erregerstrom Ie fließt in Abhängigkeit von Steuersignalen s7, die von einer Steuereinheit 7 zur Verfügung gestellt werden. Diese Steuersignale s7 werden einem als MOSFET realisierten Schalter S7 zugeführt, der daraufhin öffnet oder schließt. Antiparallel zum Schalter S7 ist eine Diode 5 und antiparallel zur Erregerwicklung 1 eine Diode 4 angeordnet.

Eine weitere Diode 3 ist zwischen dem Bordnetz, an welchem eine Spannung U_{B} = 12V anliegt, und der Erregerwicklung 1 vorgesehen. Weiterhin sind in der Figur 1 Schleifringe 2 dargestellt, über welche die Stromversorgung der Erregerwicklung 1 erfolgt.

Die Steuereinheit 7 ist weiterhin mit einem Eingangsanschluss E1 verbunden, über welchen ihr ein von einem Sensor abgeleitetes Signal zugeführt wird, wenn der Fahrer des Fahrzeugs am Ende einer Stoppphase im Start-Stopp-Betrieb das Gaspedal betätigt, um loszufahren. Ferner ist die Steuereinheit 7 mit einem Eingangsanschluss E2 verbunden, über welchen ihr ein von einem weiteren Sensor abgeleitetes Signal zugeführt wird, wenn das Fahrzeug durch eine Betätigung der Bremse bis zum Stillstand kommt, beispielsweise bei einem Ampelstop.

Ferner ist die Steuereinheit 7 mit einer Sensoreinheit 6 verbunden, mittels welcher die Lage der Wicklungsachse der Erregerwicklung 1 detektiert wird.

Die Steuereinheit 7 generiert Steuersignale s1,...,s7 in Abhängigkeit von den ihr zugeführten Eingangssignalen unter Verwendung eines in der Steuereinheit 7 abgelegten Steuerprogrammes.

Der Stator ST der in der Figur 1 dargestellten Maschine, bei der es sich um eine Klauenpolmaschine handelt, weist Phasenwicklungen U,V,W auf, die sternförmig miteinander verbunden sind.

Die Ansteuerung der Statorwicklungen erfolgt über einen PWM-Umrichter UR, welcher insgesamt sechs Schalter S1,...,S6 aufweist. Die Schalter S1 und S2 sind der Phasenwicklung U, die Schalter S3 und S4 der Phasenwicklung V und die Schalter S5 und S6 der Phasenwicklung W zugeordnet. Dabei ist die jeweilige Phasenwicklung mit dem Verbindungspunkt zwischen den beiden ihr zugeordneten Schaltern verbunden. Antiparallel zu jedem Schalter S1,...,S6 ist eine Freilaufdiode angeordnet. Der Umrichter ist mit der Fahrzeugbatterie verbunden, an welcher die Bordnetzspannung U_{B} von 12V anliegt.

Die Schalter S1,...,S6 des Umrichters UR werden von den Steuersignalen s1,...,s6 angesteuert, die von der Steuereinheit 7 zur Verfügung gestellt werden.

Nachfolgend wird die Funktionsweise der in der Figur 1 dargestellten Vorrichtung näher erläutert:

Betätigt der Fahrer des Fahrzeugs zum Zwecke eines Ampelstopps die Bremse und kommt das Fahrzeug zum Stehen, dann wird dies mittels eines die fehlende Drehbewegung der Räder erfassenden Sensors erkannt. Die Ausgangssignale dieses Sensors werden der Steuereinheit 7 über den Eingangsanschluss E2 gemeldet. Die Steuereinheit 7 erzeugt daraufhin die Steuersignale s1,...,s7 derart, dass weder in der Erregerwicklung 1 noch in den Phasenwicklungen U,V,W Strom fließt.

Während dieser Stoppphase des Fahrzeugs wird mittels der Sensoreinheit 6 die Lage der Wicklungsachse der Erregerwicklung 1 detektiert. Die erhaltene Information über die Lage der Wicklungsachse der Erregerwicklung 1 wird an die Steuereinheit 7 weitergegeben und in dieser zwischengespeichert.

Betätigt der Fahrer des Fahrzeugs danach zum Zwecke eines Startens des Fahrzeugs das Gaspedal, dann wird diese Betätigung des Gaspedals von einem Sensor detektiert und über den Eingangsanschluss E1 der Steuereinheit 7 gemeldet.

Diese leitet daraufhin einen Schnellerregungsbetrieb in die Wege, in welchem sie in Abhängigkeit von der detektierten Lage der Wicklungsachse der Erregerwicklung 1 Steuersignale s1,...,s6 für die Schalter S1,...,S6 des Umrichters UR zur Verfügung stellt. Durch diese Steuersignale werden die genannten Schalter derart angesteuert, dass in den Statorwicklungen U,V,W ein Stromfluss erzeugt wird, der ein in Richtung der Wicklungsachse der Erregerwicklung 1 gerichtetes Magnetfeld einstellt.

Da die im Stator vorliegende Zeitkonstante im Bereich von nur 2 - 5ms liegt, erfolgt der Feldaufbau in der Maschine über die Statorwicklungen innerhalb von etwa 10ms. In diesem kurzen Zeitabschnitt wird in die Erregerwicklung 1 eine positive Spannung in der Größenordnung von 100V induziert.

Damit diese in die Erregerwicklung 1 induzierte Spannung keine unerwünschten Auswirkungen auf die im Bordnetz angeordneten Verbraucher hat, ist zwischen das Bordnetz und die Erregerwicklung 1 die Diode 3 geschaltet, die als Entkopplungsdiode wirkt.

Ist das in Richtung der Wicklungsachse der Erregerwicklung 1 gerichtete Magnetfeld aufgebaut, was etwa 10ms nach dem Beginn des Startvorgangs der Fall ist, dann wird der über den Umrichter UR in den Statorwicklungen auftretende Stromfluss beendet. Dies geschieht dadurch, dass die Steuereinheit 7 Steuersignale s1,...,s6 für die Schalter des Umrichters UR zur Verfügung stellt, die die genannten Schalter in ihre geöffnete Schalterstellung bringt.

Weiterhin generiert die Steuereinheit 7 ein Steuersignal s7 für den Schalter S7 derart, dass dieser durchschaltet und einen Stromfluss durch die Erregerwicklung 1 freigibt. Dadurch kann der weitere Feldaufbau in der Maschine über den Erregerstromkreis erfolgen.

Die Figur 2 zeigt ein Diagramm, in welchem längs der Abszisse die Zeit und längs der Ordinate der Erregerstrom Iₑ aufgetragen ist.

Die Kurve k1 veranschaulicht den Verlauf des Erregerstroms Iₑ, wenn nach einer Betätigung des Gaspedals des Fahrzeugs der Erregerstrom auf die herkömmliche Art und Weise eingeschaltet wird. Es ist ersichtlich, dass der Erregerstrom vergleichsweise langsam ansteigt und sich dabei seinem stationären Endwert, der beim gezeigten Ausführungsbeispiel bei etwa 19A liegt, asymptotisch annähert. Beispielsweise beträgt der Erregerstrom nach 0,1s etwa 7A, nach 0,2s etwa 12A, nach 0,3s etwa 14A und nach 0,4s etwa 16A.

Die Kurve k2 veranschaulicht den Verlauf des Erregerstroms Iₑ, wenn nach einer Betätigung des Gaspedals des Fahrzeugs zunächst die oben beschriebene Schnellerregung unter Verwendung des ohnehin vorhandenen statorseitigen Umrichters UR vorgenommen wird und erst dann der Stromfluss durch die Erregerwicklung 1 freigegeben wird. Es ist ersichtlich, dass in diesem Fall der Erregerstrom bereits nach etwa 10ms sprunghaft auf einen Wert von etwa 10A steigt und sich dann asymptotisch dem genannten stationären Endwert nähert. Aus dem Verlauf der Kurve k2 geht hervor, dass der Erregerstrom nach 0,1s bereits etwa 13A, nach 0,2s bereits etwa 15A, nach 0,3s bereits etwa 17A und nach 0,4s etwa 18A beträgt.

Da die verwendete Klauenpolmaschine als riemengetriebener Startergenerator des Fahrzeugs bei der Wicklungsauslegung, die dem gezeigten Ausführungsbeispiel zugrunde liegt, ab einem Erregerstrom von etwa 12A stark gesättigt ist, stehen etwa 70 - 80% des maximalen Drehmoments bereits nach etwa 70ms zur Verfügung. Dies bewirkt im Vergleich zum Stand der Technik eine wesentliche Verkürzung der Startzeit im Start-Stopp-Betrieb des Fahrzeugs.

Die beschriebene Vorgehensweise liefert besonders gute Ergebnisse, wenn die magnetische Kopplung zwischen den Statorwicklungen und der Erregerwicklung in der Nähe von 100% liegt. Voraussetzung für das Erzielen einer derart engen magnetischen Kopplung sind eine exakte Ausrichtung zwischen dem Stromvektor im Stator und der Wicklungsachse der Erregerwicklung des Rotors sowie eine geringe Streuinduktivität der Wicklungen.

Zusammenfassend wird durch die Erfindung erreicht, dass die zum Aufbau des Erregerfeldes benötigte Zeit im Vergleich zu bekannten Start-Stopp-Systemen reduziert ist. Dadurch kann das benötigte Motordrehmoment schnell zur Verfügung gestellt werden, wodurch die Startzeit bei einem Start-Stopp-System reduziert wird. Gemäß der Erfindung wird der ohnehin vorhandene statorseitige Umrichter dazu verwendet, mit einer kleinen Zeitkonstante die magnetische Energie für das Erregerfeld in der Maschine aufzubauen. Dies erfolgt unter Verwendung einer Detektion der Lage der Wicklungsachse der Erregerwicklung in der Stoppphase des Start-Stopp-Betriebes und einer davon abhängigen Ansteuerung der Schalter des Umrichters zu Beginn der nachfolgenden Startphase. Bei der Erfindung wird kein zusätzlicher Kondensator im Erregerkreis benötigt, was die Schüttelfestigkeit der beanspruchten Vorrichtung begünstigt. Gegenüber herkömmlichen Erregerschaltungen für riemengetriebene Startergeneratoren in Fahrzeuganwendungen wird eine zusätzliche Diode verwendet, durch welche unerwünschte Auswirkungen der in die Erregerwicklung induzierten hohen Spannung auf Bordnetzverbraucher vermieden werden.

Der Algorithmus für die beschriebene Schnellerregung lässt sich leicht im Startablauf mittels einfacher Zustandsautomaten realisieren. Es bedarf nur eines geringen Zusatzaufwandes in der Steuerelektronik.

## Patentansprüche

1. Vorrichtung zur Verbesserung des Start-Stopp-Betriebes eines Fahrzeugs, welche
- eine dem Startergenerator des Fahrzeugs zugeordnete und an das Bordnetz des Fahrzeugs angeschlossene Erregerwicklung,
- eine Steuereinheit, durch deren Steuersignale der durch die Erregerwicklung fließende Erregerstrom beeinflusst wird, und
- Statorwicklungen enthält, die über einen mehrere Schalter aufweisenden Umrichter mit dem Bordnetz des Fahrzeugs verbindbar sind,
**dadurch gekennzeichnet, dass**
- sie eine Sensoreinheit (6) aufweist, die in der StoppPhase des Start-Stopp-Betriebes die Lage der Wicklungsachse der Erregerwicklung (1) detektiert,
- die Sensoreinheit (6) mit der Steuereinheit (7) verbunden ist, und
- die Steuereinheit (7) zur Einleitung eines Startvorganges Steuersignale (s1,...,s6) für die Schalter (S1,...,S6) des Umrichters (UR) derart generiert, dass in den Statorwicklungen (U,V,W) ein Stromfluss erzeugt wird, der ein in Richtung der Wicklungsachse der Erregerwicklung (1) gerichtetes Magnetfeld einstellt.

2. Vorrichtung nach Anspruch 1, **dadurch gekennzeichnet, dass** die Steuereinheit (7) nach erfolgter Einstellung des in Richtung der Wicklungsachse der Erregerwicklung (1) gerichteten Magnetfelds Steuersignale (s1,...,s6) für die Schalter (S1,...,S6) des Umrichters (UR) derart generiert, dass der Stromfluss in den Statorwicklungen (U,V,W) endet, und einen Erregerstromfluss bewirkende Steuersignale (s7) generiert.

3. Vorrichtung nach Anspruch 1 oder 2, **dadurch gekennzeichnet, dass** die Steuereinheit (7) die den Stromfluss in den Statorwicklungen (U,V,W) bewirkenden Steuersignale (s1,...,s6) nach einer Betätigung des Gaspedals des Fahrzeugs generiert.

4. Vorrichtung nach Anspruch 2 oder 3, **dadurch gekennzeichnet, dass** die Steuereinheit (7) die den Stromfluss in den Statorwicklungen (U,V,W) beendenden Steuersignale (s1,...,s6) und die den Erregerstromfluss bewirkenden Steuersignale (s7) nach Ablauf eines vorgegebenen Zeitintervalles nach der Einleitung eines Startvorgangs generiert.

5. Vorrichtung nach einem der vorhergehenden Ansprüche, **dadurch gekennzeichnet, dass** zwischen der Erregerwicklung (1) und dem Bordnetz eine Diode (3) angeordnet ist, deren Kathode mit der Erregerwicklung (1) und deren Anode mit dem Bordnetz verbunden ist.

## Claims

1. Apparatus for improving the start/stop operation of a vehicle, which comprises
- a field winding which is associated with the starter generator of the vehicle and is connected to the on-board electrical system of the vehicle,
- a control unit whose control signals influence the field current flowing through the field winding, and
- stator windings which can be connected to the on-board electrical system of the vehicle via a converter having a plurality of switches,
**characterized in that**
- it has a sensor unit (6) which detects the position of the winding axis of the field winding (1) in the stop phase of the start-stop operation,
- the sensor unit (6) is connected to the control unit (7), and
- in order to initiate a start process, the control unit (7) generates control signals (s1,...,s6) for the switches (S1,...,S6) of the converter (UR) in such a way that a current flow is generated in the stator windings (U, V, W) and establishes a magnetic field which is directed towards the winding axis of the field winding (1).

2. Apparatus according to Claim 1, **characterized in that**, after the magnetic field which is directed towards the winding axis of the field winding (1) is established, the control unit (7) generates control signals (s1,...,s6) for the switches (S1,...,S6) of the converter (UR) in such a way that the current flow in the stator windings (U, V, W) ends, and generates control signals (s7) which produce a field current flow.

3. Apparatus according to Claim 1 or 2, **characterized in that** the control unit (7) generates the control signals (s1,...,s6), which produce the current flow in the stator windings (U, V, W), after the accelerator pedal of the vehicle is operated.

4. Apparatus according to Claim 2 or 3, **characterized in that**, after a predefined time interval has elapsed following initiation of a start process, the control unit (7) generates the control signals (s1,...,s6), which end the current flow in the stator windings (U, V, W), and the control signals (s7) which produce the field current flow.

5. Apparatus according to one of the preceding claims, **characterized in that** a diode (3), whose cathode is connected to the field winding (1) and whose anode is connected to the on-board electrical system, is arranged between the field winding (1) and the on-board electrical system.

## Revendications

1. Dispositif pour améliorer le fonctionnement de marche-arrêt d'un véhicule, comportant :
- un bobinage d'excitation associé au générateur de démarrage du véhicule et raccordé au réseau de bord du véhicule,
- une unité de commande dont les signaux de commande agissent sur le courant d'excitation qui circule à travers le bobinage d'excitation et
- des bobinages de stator qui peuvent être reliés au réseau de bord du véhicule par l'intermédiaire d'un convertisseur muni de plusieurs commutateurs,
**caractérisé en ce qu'**
- il comporte une unité de détection (6) qui détecte la position de l'axe du bobinage d'excitation (1) pendant la phase d'arrêt du fonctionne ment de marche-arrêt,
- l'unité de détection (6) est reliée à l'unité de commande (7) et
- pour lancer une opération de démarrage, l'unité de commande (7) génère des signaux de commande (s1 à s6) pour les commutateurs (S1 à S6) du convertisseur (UR) de telle manière qu'un flux de courant qui établit un champ magnétique orienté en direction de l'axe de bobinage du bobinage d'excitation (1) est produit dans les bobinages de stator (U, V, W).

2. Dispositif selon la revendication 1,
**caractérisé en ce qu'**
après avoir réglé le champ magnétique orienté en direction de l'axe de bobinage du bobinage d'excitation (1), l'unité de commande (7) génère des signaux de commande (s1 à s6) pour les commutateurs (S1 à S6) du convertisseur (UR) de telle manière que le flux de courant cesse dans les bobinages de stator (U, V, W) et génère des signaux de commande (s7) qui provoquent un flux de courant d'excitation.

3. Dispositif selon la revendication 1 ou 2,
**caractérisé en ce que**
l'unité de commande (7) génère les signaux de commande (s1 à s6) qui provoquent le flux de courant dans les bobinages de stator (U, V, W) après un actionnement de la pédale d'accélération.

4. Dispositif selon la revendication 2 ou 3,
**caractérisé en ce que**
l'unité de commande (7) génère les signaux de commande (s1 à s6) qui font cesser le flux de courant dans les bobinages de stator (U, V, W) et les signaux de commande (s7) qui provoquent le flux de courant d'excitation après qu'un laps de temps prédéfini s'est écoulé après l'enclenchement d'un démarrage.

5. Dispositif selon l'une des revendications précédentes,
**caractérisé en ce qu'**
une diode (3) dont la cathode est reliée au bobinage d'excitation (1) et l'anode au réseau de bord est placée entre le bobinage d'excitation (1) et le réseau de bord.
